# EUROPÄISCHE PATENTSCHRIFT

(11) **EP 2 392 914 B1**
(45) Veröffentlichungstag und Bekanntmachung des Hinweises auf die Patenterteilung: **01.05.2013**
(21) Anmeldenummer: 10015286.7
(22) Anmeldetag: 19.11.2007
(51) Int. Cl.: G01N 21/05, G01N 21/31, G01N 21/35

(54) **Optische Messzelle**
Optical measuring cell
Cellule de mesure optique

(30) Priorität: 22.11.2006 DE 102006055157
(43) Veröffentlichungstag der Anmeldung: 07.12.2011
(62) Teilanmeldung aus: 07822692.5
(73) Patentinhaber: Siemens Aktiengesellschaft, 80333 München (DE)
(72) Erfinder: Fleischer, Maximilian, Prof., 85635 Höhenkirchen (DE); Lampe, Uwe, Dr., 21614 Buxtehude (DE); Strzoda, Rainer, 81825 München (DE)

(56) Entgegenhaltungen:
- DE-A1-102005 016 320
- JP-A- 2006 125 919
- MORDKOVICH V Z ET AL: "The large-scale production of hydrogen from gas mixtures: A use for ultra-thin palladium alloy membranes", INTERNATIONAL JOURNAL OF HYDROGEN ENERGY, ELSEVIER SCIENCE PUBLISHERS B.V., BARKING, GB, Bd. 18, Nr. 7, 1. Juli 1993 (1993-07-01), Seiten 539-544, XP025683896, ISSN: 0360-3199, DOI: 10.1016/0360-3199(93)90171-6 [gefunden am 1993-07-01]
- DOCQUIER N ET AL: "Combustion control and sensors: a review", PROGRESS IN ENERGY AND COMBUSTION SCIENCE, ELSEVIER SCIENCE PUBLISHERS, AMSTERDAM, NL, Bd. 28, Nr. 2, 1. Januar 2002 (2002-01-01) , Seiten 107-150, XP004332227, ISSN: 0360-1285, DOI: 10.1016/S0360-1285(01)00009-0

## Beschreibung

Die Erfindung bezieht sich auf eine optische Messzelle für Gasabsorptionsverfahren.

Bei der Photometrie und optischen Spektroskopie zur Bestimmung der Konzentration einer Gaskomponente in einem Messgas mittels Absorptionsmessung besteht bei der Messküvette das Problem, dass die Transmission der leeren Küvette ohne vorhandenes Zielgas, also ohne Absorption durch das zu messende Zielgas, bekannt sein muss, um das Zielgas durch Auswertung der gasabhängigen Absorption bestimmen zu können.

Eine bekannte Lösung besteht darin die Küvette mit einem Gas aus einem Reservoir, beispielsweise einer Druckgasflasche, zu spülen, das die zu messende Gaskomponente nicht enthält und auch nicht im verwendeten Wellenlängebereich absorbiert. Hier ist beispielsweise Stickstoff einsetzbar, wenn als Messgas Umgebungsluft verwendet wird. Da herkömmliche Messzellen je nach Anwendung allgemein große Volumina aufweisen, wie typisch > 100 cm³ bis mehrere Liter, benötigt man für jede Spülung ein Vielfaches des Messzellenvolumens an Spülgas, was bei kontinuierlich laufenden bzw. einer großen Anzahl von Messvorgängen zu einem erheblichen Gasverbrauch führt.

Aus der DE 10 2005 016 320 A1 ist eine optische Messzelle für Gasabsorptionsmessungen bekannt mit einer Lichtquelle zur Durchstrahlung eines Messvolumens und einem Lichtempfänger sowie einer Gasfördereinrichtung zur Beschickung des Messvolumens mit einem Mess- oder einem Spülgas.

Aus der JP 2006 125919 A ist eine optische Messzelle mit Lichtquelle und Lichtdetektor bekannt, die eine Hohlfaser als Messvolumen umfasst.

Der Erfindung liegt die Aufgabe zugrunde zur Erzeugung eines stabilen Null eines optischen Gassensorsystems, bei beispielsweise festliegenden Wellenlängen und nicht scannendem System, eine Messstrecke zu beschreiben, die unabhängig von Veränderungen / Verschmutzungen des optischen Messaufbaus, oder der Messküvette ist und durch ein möglichst kleines Messgasvolumen ausgezeichnet ist.

Die Lösung geschieht mittels der Merkmalskombination des Anspruchs 1.

Eine vorteilhafte Ausgestaltungen ist Unteransprüch 2 zu entnehmen.

Zur Messung der gasabhängigen Absorption werden mindestens eine Hohlfaser eingesetzt mit typischen Durchmessern im Sub-Millimeter Bereich. Dabei werden sowohl das zu messende Gas wie auch das für die Absorptionsmessung verwendete Licht in den stirnseitig offenen Kern der Hohlfaser geführt. Die Einkopplung des Lichtes erfolgt dabei in der Längsrichtung der Hohlfaser: durch die auftretenden flachen Reflexionswinkel werden derart gute Reflexionseigenschaften erzeugt, dass das Licht selbst bei stark gekrümmter Hohlfaser, insbesondere Glasfaser, mehrere Meter weit ohne signifikante Verluste geführt werden kann.

Mit Hohlfasern erreicht man den besonderen Vorteil einer großen Absorptionsstrecke und damit einen sensitiven Gasnachweis bei einem geringen Messzellenvolumen. Ein Meter einer Hohlfaser mit 0,5 mm Durchmesser weist z.B. ein Volumen von ca. 0,2 cm³ auf. Zur Spülung einer solchen Faser sind also nur wenige cm³ Spülgas erforderlich. Eine 3-Liter-Flasche Spülgas mit einem Druck von 200 bar reicht bei einer wiederkehrenden Messung im 10 Minuten-Takt und einem Gasverbrauch von ca. 1 cm³ Gas pro Spülung für mehr als zehn Jahre, um die Messapparatur mit Spülgas zu versorgen. Damit kann ein autarker Messaufbau realisiert werden, der ohne Nachführung von Hilfsmedien, z.B. zum Spülen, während seiner Lebensdauer auskommt.

Erfindungsgemäß wird die Spülgas-Versorgung B, bestehend aus einem Reservoir B2, wie Gasdruckflasche, durch einen Spülgas-generator B1, bei dem das Spülgas in einem Reinigungsvorgang direkt erzeugt wird, ersetzt. Der Aufbau besteht dann aus der optischen Messzelle 14 und dem Spülgas-Generator B1.

Der Spülgasgenerator besteht in einer ersten erfindungsgemäßen Alternative aus einer Gasförderpumpe 10 und einem Gasfilter 11 besteht.

Der Gasfilter besteht dabei aus einer geheizten Palladium-Membran, die vergleichbar mit einer Pd-Diffusionszelle ist. Die benötigte Druckdifferenz wird von einer Gasförderpumpe bereitgestellt. Diese Variante ist bei Messung in einer kontaminierten Wasserstoffgasumgebung zu verwenden.

In einer zweiten erfindungsgemäßen Alternative - erfolgt die Messung in Luft oder einer Sauerstoffatmosphäre - besteht der Gasfilter aus einer Sauerstoffionen leitenden Pumpzelle als Sauerstofflieferant. Zwischen der Primärseite und der Sekundärseite der geheizten Zirkonoxid-Keramik wird eine Spannung angelegt, die zu einem Sauerstofftransport durch die Keramik führt. Auf der Sekundärseite liegt reiner Sauerstoff vor, der als Spülgas genutzt werden kann. Eine zusätzliche Gasförderpumpe entfällt bei dieser Ausführung, weil die Pumpwirkung schon im Prinzip der Zelle enthalten ist.

Die Erfindung beruht im Wesentlichen auf der Kombination der Verwendung einer Hohlfaser als optische Messzelle mit ihrem typischen Volumen. Dies ist abhängig von der Faserlänge und liegt im Bereich von in der Regel weniger als oder gleich 1cm³ pro Meter Faserlänge, womit reduzierte Anforderungen an die über viele Spülzyklen aufsummierte nachzufüllende Menge des benötigten Spülgases gestellt werden. Die Anforderungen an die Spülgasversorgung lassen sich mit kleinvolumigen Gasflaschen bzw. Spülgas-Generatoren, wie oben beschrieben erfüllen.

Bei Gasmessungen über einen längeren Zeitraum ergibt sich der Vorteil, dass über einen beträchtlichen Zeitraum keine Nachfüllung im Vorrat von Hilfsgas/Spülgas für den Messaufbau erforderlich ist, falls eine Gasdruckflasche zur Lieferung von Spülgas eingesetzt wird. Damit ergibt sich die Möglichkeit autarke Gasmonitore bereit zu stellen, die geringsten Wartungsaufwand bzgl. des Hilfsgases aufweisen. Auf Grund der kompakten Komponenten wie Hohlfaser, Spülgasgenerator, können auch tragbare hoch sensitive Gasmonitore nach diesem Messprinzip realisiert werden.

Im Folgenden werden mit Bezug auf die begleitende Figur die Erfindung nicht einschränkende Ausführungsbeispiele beschrieben:

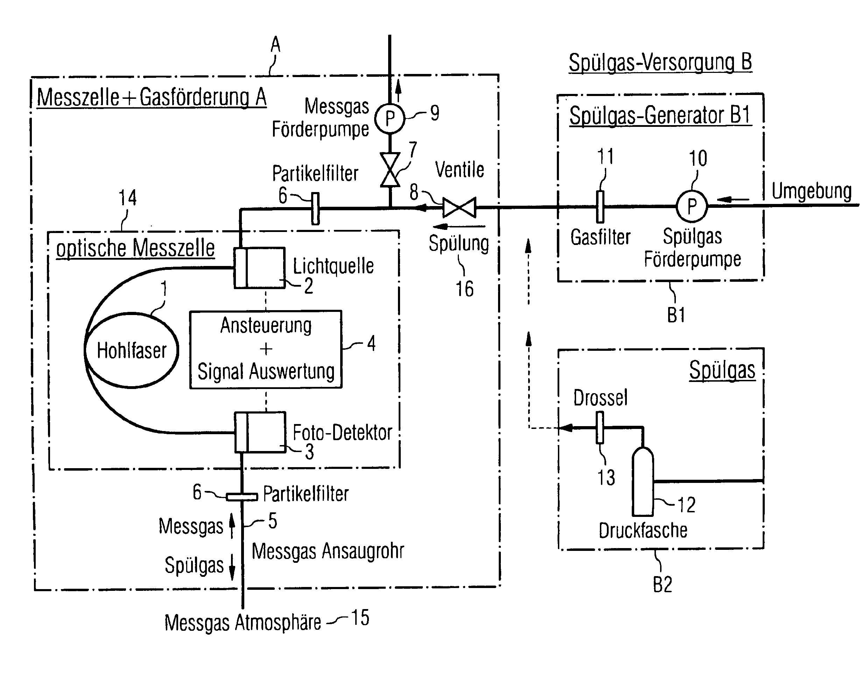

Die Figur zeigt eine Messzelle mit Gasförderung A, die eine optische Messzelle 14 mit einer Hohlfaser 1 aufweist.

Die Figur stellt im Detail ein Ausführungsbeispiel der Erfindung vor. Die Anordnung besteht aus der optischen Messzelle 14, der Messgasförderung und der Spülgasförderung, sowie einer Spülgas-Versorgung. Die optische Messzelle umfasst die Hohlfaser 1 als Absorptionsmesszelle mit der Lichtquelle 2, dem Foto-Detektor 3 und der Ansteuerung- und Auswerteschaltung 4.

Die Messgasförderung umfasst das Messgas-Ansaugrohr 5, je ein optionales kleinporiges Partikelfilter 6 und nach der Hohlfaser 1, ein Ventil 7 vor der Messgasförderpumpe 9, sowie einen Gasauslass. Ein Ventil 8 schließt die Messzelle mit Gasförderung A in Richtung auf die Spülgas-Versorgung B ab. Die Spülgas-Versorgung besteht aus einem Spülgas-Generator B1, der ein Spülgas erzeugt, welches kein bei einer Messung zu detektierendes Gas enthält. Der Spülgas-Generator B1 umfasst die Gasförderpumpe 10 und den eigentlichen Gaserzeuger.

Ablauf eines Messzyklus:
- Spülzyklus: Die Spülgaspumpe 10 ist in Betrieb und das Ventil 8 ist geöffnet, während das Ventil 7 geschlossen ist. Die Messgas Förderpumpe 9 ist ausgeschaltet. Das Spülgas durchströmt die Hohlfaser 1 und spült die Messgasreste zurück in die Messgas-Atmosphäre 15. Nach ausreichender Spülzeit erfolgt eine optische Absorptionsmessung, zunächst die Nullmessung. Die an einem mit Spülgas gefüllten Gasvolumen in der Hohlfaser durchgeführt wird.
- Messzyklus: Das Ventil 8 wird geschlossen, das Ventil 7 wird geöffnet, die Spülgaspumpe 10 wird ausgeschaltet und die Messgaspumpe 9 in Betrieb gesetzt. Jetzt strömt das Messgas durch die Hohlfaser 1 und es wird eine optische Transmissionsmessung durchgeführt. Das Verhältnis der Transmission einmal mit Messgas und einmal mit Spülgas (Nullmessung) ergibt die gasabhängige Transmission, unabhängig von der Grundtransmission der Absorptionsstrecke, der Hohlfaser. Der Vorgang erfolgt analog, wenn das Spülgas aus einer Druckgasflasche 12 bereitgestellt wird.

Im Ausführungsbeispiel durchströmen Messgas und Spülgas die Hohlfaser in entgegen gesetzter Richtung. Durch Umkehr der Förderrichtung der Messgas-Förderpumpe lässt sich auch eine Durchströmung der Hohlfaser für beide Gase in gleicher Richtung realisieren.

Die Erfindung umfasst zwei alternative Spülgas-Generatoren:
1. Erfolgt die Gaskonzentrationsmessung z.B. in einer Wasserstoff-Atmosphäre, dann besteht das Gasfilter aus einer geheizten Palladium-Membran, die vergleichbar mit einer Pd-Diffusionszelle ist. Die benötigte Druckdifferenz wird von einer Gasförderpumpe bereitgestellt. Dem Filter wird der kontaminierte Wasserstoff zugeführt. Da durch Pd nur Protonen diffundieren können, ergibt sich auf der Sekundärseite reiner Wasserstoff, der als Spülgas genutzt werden kann.
2. Erfolgt die Messung in Luft oder einer Sauerstoffatmosphäre bietet sich eine Sauerstoffionen leitende Pumpzelle, beispielsweise aus ca. 600°C heißem Zirkonoxid, als Sauerstofflieferant an. Zwischen der Primärseite und der Sekundärseite der geheizten Zirkonoxid-Keramik wird eine Spannung angelegt, die zu einem Sauerstoff Transport durch die Keramik führt. Auf der Sekundärseite liegt reiner Sauerstoff vor, der als Spülgas genutzt werden kann. Eine zusätzliche Pumpe entfällt bei dieser Ausführung, weil die Pumpwirkung schon im Prinzip der Zelle enthalten ist. Das Referenzgas Sauerstoff kann gemäß diesem Prinzip auch durch die elektrochemische Zersetzung weiterer sauerstoffhaltiger Gase erzeugt werden, wie H2O, CO2, CO, NO, NO2.

Auf Grund des geringen Volumens der Messzelle und der geringen benötigten Spülgasmengen aufgrund des Einsatzes einer Hohlfaser als optische Messzelle lassen sich Spülgas-Generatoren auch kompakt ausführen. Dies ermöglicht die Realisierung von so genannten Gasmonitoren in kompakter Form, da nicht nur die Gasabsorptions-Messzelle, sondern auch die Spülgas-Versorgung klein ausgelegt sind bzw. ausgelegt werden können.

## Patentansprüche

1. Optische Messzelle für Gasabsorptionsmessungen,
- mit mindestens einer Lichtquelle (2), zur Einbringung von Licht in ein Messvolumen,
- mit mindestens einem in Bezug auf das Messvolumen und in Richtung der Lichtausbreitung der Lichtquelle (2) ungefähr gegenüberliegenden Fotoempfänger (3) zur Aufnahme von durch das Messvolumen geführten Lichts,
wobei mittels einer Auswerteeinheit (4) die Konzentration von einem oder mehreren Zielgasen im Messgasvolumen ermittelbar ist, wobei
- das Messvolumen durch das innere Volumen einer Hohlfaser (1) dargestellt ist, deren Innendurchmesser im Wesentlichen weniger als 1 mm beträgt,
**gekennzeichnet durch** eine Gasfördereinrichtung, mit der eine wahlweise Beschickung des Messvolumens mit Messgas oder Spülgas ermöglicht ist, wobei die Gasfördereinrichtung zur Beschickung des Messvolumens mit Spülgas von einem Spülgas-Generator (B1) dargestellt ist, wobei der Spülgas-Generator (B1) eine geheizte Palladium-Membran und eine Gasförderpumpe (10) umfasst oder eine Sauerstoffionen leitende Pumpzelle mit Mitteln zur Erzeugung einer Spannung zwischen der Primär- und der Sekundärseite der Pumpzelle umfasst.

2. Optische Messzelle nach Anspruch 1, bei der Innenflächen der Hohlfaser (1) im Wesentlichen Licht reflektierend ausgebildet sind.

## Claims

1. Optical measuring cell for gas absorption measurements,
- comprising at least one light source (2) for introducing light into a measuring volume,
- comprising at least one light sensor (3) arranged approximately opposing the light source (2) in relation to the measuring volume and in the direction of propagation of the light source for detecting light conducted through the measuring volume,
wherein, by means of an evaluating unit (4), the concentration of one or more target gases in the test gas volume can be determined, wherein
- the measuring volume is represented by the internal volume of a hollow fibre (1), the internal diameter of which is substantially less than 1 mm,
**characterised by** a gas delivery device enabling the measuring volume to be optionally supplied with test gas or flushing gas, wherein the gas delivery device is configured to supply the measuring volume with flushing gas from a flushing gas generator (B1), wherein the flushing gas generator (B1) comprises a heated palladium membrane and a gas delivery pump (10) or a pump cell which conducts oxygen ions and has means for generating a voltage across the primary and the secondary sides of the pump cell.

2. Optical measuring cell according to claim 1, wherein the inner surfaces of the hollow fibre (1) are configured to be substantially light-reflecting.

## Revendications

1. Cellule de mesure optique pour des mesures d'absorption de gaz,
- comprenant au moins une source ( 2 ) lumineuse pour introduire de la lumière dans un volume de mesure,
- comprenant au moins un photorécepteur ( 3 ) à peu près en opposition par rapport au volume de mesure et dans la direction de propagation de la lumière à la source ( 2 ) lumineuse et destiné à l'absorption de la lumière qui est passée dans le volume de mesure,
dans laquelle au moyen d'une unité ( 4 ) d'exploitation, la concentration d'un ou de plusieurs gaz cibles dans le volume de gaz de mesure peut être déterminée, dans laquelle
- le volume de mesure est représenté par le volume intérieur d'une fibre ( 1 ) tubulaire dont le diamètre intérieur est sensiblement plus petit que 1 mm,
**caractérisée par** un dispositif de transport du gaz, par lequel au choix un chargement du volume de mesure en du gaz de mesure ou en du gaz de balayage est rendu possible, le dispositif de transport de gaz pour le chargement du volume de mesure en gaz de balayage étant représenté par un générateur ( B1 ) de gaz de balayage, le générateur ( B1 ) de gaz de balayage comprenant une membre de palladium chauffée et une pompe ( 10 ) de transport de gaz ou une cellule de pompage conduisant des ions oxygène et ayant des moyens de production d'une tension entre le côté primaire et le côté secondaire de la cellule de pompage.

2. Cellule de mesure optique suivant la revendication 1, dans laquelle des surfaces intérieures de la fibre ( 1 ) tubulaires réfléchissent essentiellement de la lumière.
